# EUROPEAN PATENT APPLICATION

(11) **EP 1 729 078 A2**
(43) Date of publication of application: **06.12.2006**
(21) Application number: 06010881.8
(22) Date of filing: 24.05.2006
(51) Int. Cl.: F28D 7/16, D06F 58/24, F28F 1/04, F28F 1/12

(54) **Heat exchanger for dryer and condensing type dryer using the same**

(30) Priority: 26.05.2005 KR 20050044690
(71) Applicant: LG Electronics Inc., Yongdungpo-gu Seoul (KR)
(72) Inventor: Lee, Hyun-Uk, Gimhae Gyeongsangnam-Do (KR); Oh, Jung-Geun, Gimhae Gyeongsangnam-Do (KR); Eom, Yoon-Seob, Changwon Gyeongsangnam-Do (KR)
(74) Representative: Vossius & Partner

(57) **Abstract**

A heat exchanger (30) for a dryer includes a plurality of tubes (32) for circulating wet air and a plurality of fin structures (34) for circulating external air which are alternately laminated together to form the heat exchanger. The fin structure (34) includes a plurality of air passages formed by repeatedly bending a flat-type metal plate in a zigzag form. A plurality of fins (36) are formed on side surfaces of the air passages (37). The fins (36) protrude from the side surfaces of the air passages (37) at an inclination angle. The fins are formed by partially cutting the plate forming the side surfaces of the air passages, and by the bending the cut portions of the plate into the air passages to from the fins. A heat transfer area and a heat transfer efficiency are increased, thereby enhancing a drying efficiency of a dryer having the heat exchanger.

## Description

The present invention relates to a heat exchanger for a condensing type Dryer.

A laundry or clothes dryer serves to dry an object to be dried by blowing hot air generated from a heater into a drum. The dryers are divided into an exhausting type and a condensing type, according to a method for processing the humid air generated as the object to be dried is dried.

In the exhausting type dryer, humid air exhausted from a drum is exhausted outside the dryer. In the condensing type dryer, humid air exhausted from a drum is condensed by a condenser, to remove moisture from the air, and the dry air is fed back into the drum to be re-circulated.

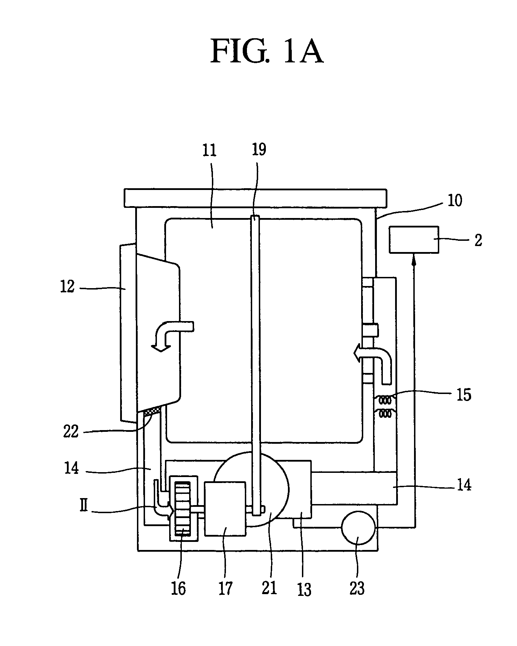

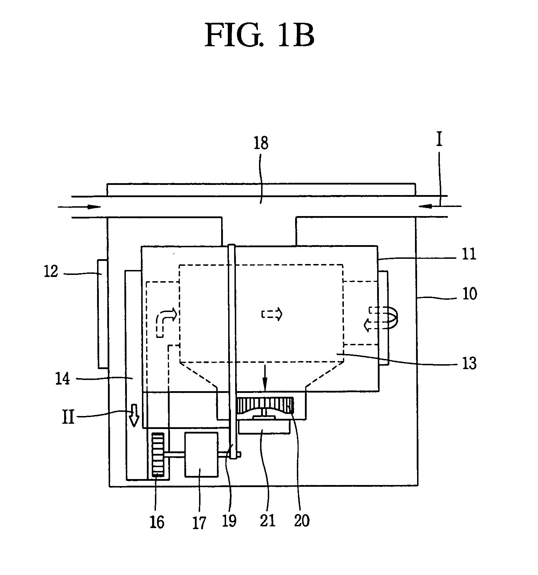

The condensing type dryer comprises a drum for drying laundry, a filter for filtering foreign materials, a heat exchanger (or condenser) for removing moisture, a fan, a heater for shortening the drying time, and piping or ducts for connecting each component. One example of a condensing type dryer is shown in FIGS. 1A and 1 B. In FIGS. 1 A and 1 B, the single line arrows denote a flow of external air, and the double line arrows denote a flow of air that is re-circulated through the drum of the dryer and the heat exchanger/condenser.

As shown, a drum 11 for receiving an object to be dried is rotatably installed in a body 10 having a door 12 at a front surface thereof. The drum 11 is connected to a motor 17 installed at a lower portion of the body 10 by a belt 19 which serves to rotate the drum 11. A condenser 13 for condensing hot humid air that has passed through the drum of the dryer, thereby removing moisture from the air, is installed at a lower portion of the body 10. A front portion and a rear portion of the condenser 13 are respectively connected to a circulation duct 14, which itself is connected to front and rear sides of the drum 11. This allows air to be exhausted from the drum and into the condenser 13, and the air can then be re-introduced to the drum 11.

The circulation duct 14 is provided with a heater 15 for heating air that has passed through the condenser 13 and a circulation fan 16 for forcibly circulating the air. The circulation fan 16 is connected to a shaft of the motor 17. Reference numeral 22 denotes a filter for filtering foreign materials such as lint, etc. from air exhausted to the circulation duct 14 through the front side of the drum 11.

In order to condense air circulated by the circulation duct 14 in the condenser 13, external cold air has to be supplied to the condenser 13. Accordingly, an external air supplying duct 18 connected to outside of the body 10 is connected to one side of the condenser 13. A cooling fan 20 and a cooling fan driving motor 21 for forcibly sucking external air through the external air supplying duct 18 and then exhausting the air into the body 10 are connected to another side of the condenser 13. A water collector (not shown) for collecting condensing water generated at the time of a condensing process is installed at a lower portion of the condenser 13. Also, a pump 23 for transmitting the condensing water collected in the water collector to a condensing water storage tank 2 is installed at a lower portion of the condenser 13.

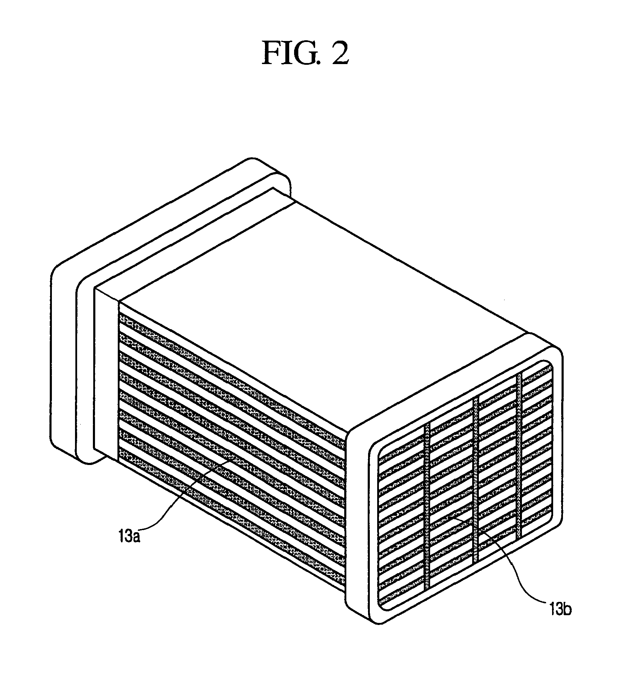

One example of the heat exchanger used for a condensing type clothes dryer is shown in FIG. 2. As shown, dry air introduced into an external air inlet 13a is heat-exchanged with wet air introduced into a wet air inlet 13b inside the heat exchanger. During the heat exchange process, the wet air is condensed onto a surface inside the heat exchanger and thus water drops are generated.

One would like to be able to dry laundry with less consumption of power within a shorter period of time. In order to shorten drying time, a heater capacity or a fan capacity has to be increased. However, these changes usually cause a cost increase, an electricity charge increase, or a noise increase.

In the condensing type dryer, the heat exchanger is a core component that influences a drying efficiency. A heat exchanger that provides a greater heat transfer efficiency would allow the dryer itself to be more efficient, without increasing the power consumption.

Therefore, an object of the present invention is to provide a heat exchanger having a new structure capable of enhancing a heat transfer area and a heat exchanging efficiency.

Another object of the present invention is to provide a heat exchanger capable of reducing a fabrication cost and enhancing productivity.

Still another object of the present invention is to provide a heat exchanger for a dryer capable of enhancing an efficiency of the heat exchanger and thereby enhancing an efficiency of the dryer.

To achieve these and other advantages and in accordance with the purpose of the present invention, as embodied and broadly described herein, a heat exchanger for a dryer embodying the invention includes a plurality of tubes/ducts for circulating wet air and a plurality of air passages with fin structures for circulating external air. The ducts and air passages are stacked, one on top of another in an alternating fashion to form the heat exchanger. The fin structure and of air passages are formed by repeatedly bending a flat-type metal plate in a zigzag fashion. A plurality of fins are formed on sidewalls of the air passages. The fins may protrude from the sidewalls into the air passages at an inclination angle. The plurality of fins formed on each sidewall surface of the air passages are divided into two groups, each of which have a different inclination angle.

A condensing type dryer embodying the invention includes a drum rotatably installed in a cabinet; a heat exchanger/condenser for heat-exchanging wet air with air introduced from outside and thereby condensing the wet air; a fan; and a heat source for heating the air circulating in the dryer. The heat exchanger/condenser would be constructed as described above.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a sectional view showing one example of a clothes dryer;
FIG. 1B is a plane view showing the clothes dryer of FIG. 1A;
FIG. 2 is a perspective view showing one example of a heat exchanger/condenser;
FIG. 3 is an exploded view showing components of a heat exchanger according to the present invention;
FIG. 4 is a perspective view showing a laminated structure of a heat exchanging portion of the heat exchanger according to the present invention;
FIGS. 5A to 5C are diagrams showing details of a fin structure of a heat exchanger/condenser according to the present invention;
FIG. 6 is a photo showing the fin structure of a heat exchanger/condenser according to the present invention; and
FIG. 7 is a graph showing a heat transfer performance of a heat exchanger/condenser according to the present invention.

Reference will now be made in detail to preferred embodiments of the present invention, examples of which are illustrated in the accompanying drawings.

A heat exchanger according to the present invention enhances an efficiency thereof by increasing a heat transfer area. Heat transfer can be smoothly performed between wet air circulated in a dryer and air introduced from outside of the dryer. Heat exchange is also increased by introducing external air into the heat exchanger as a turbulent flow. In an experiment for heat exchange performance, a heat exchanger embodying the present invention showed an efficiency that was more than 15% greater than comparable prior art designs.

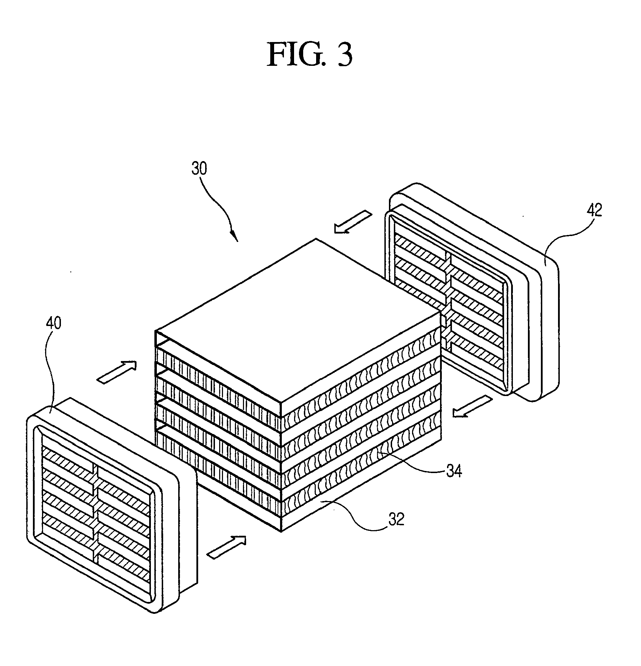

In FIG. 3, components of a heat exchanger according to the present invention are shown. A heat exchanger 30 is formed as a plurality of tubes 32 and a plurality of fin structures 34, which are stacked together in an alternating fashion. Each of the tubes 32 has a duct structure in which both ends are open. A cross-section of the tubes 32 has a rectangular shape. A pipe or duct(not shown), along which circulating air from inside the dryer flows, is respectively connected to the opened ends of the tubes 32. The fin structures 34 comprise a flat plate that has been repeatedly bent in a zigzag form.

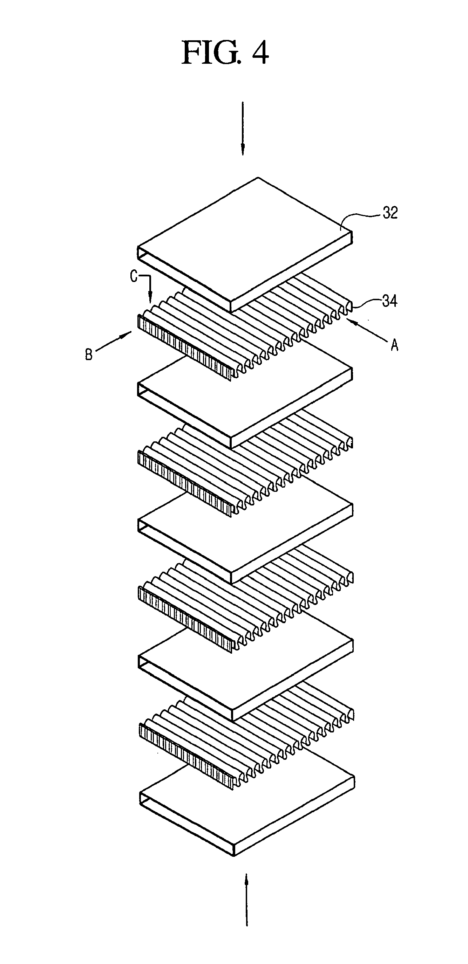

The tubes 32 and the fin structures 34, each having a thin thickness, are stacked on one another to form a heat exchanger. The more tubes 32 and fin structures 34 that are added, the more the heat transfer area can be increased. FIG. 4 shows a process for laminating each tube 32 and each fin structure 34.

The tube 32 and the fin structure 34 are both formed of a metal having an excellent heat transfer characteristic, such as Al or Al alloy. A front cover 40 and a rear cover 42 are respectively coupled to a front surface and a rear surface of the heat exchange portion 30. The front cover 40 and the rear cover 42 couple the heat exchange portion 30 to the pipes, ducts or other components inside the dryer. The front cover 40 and the rear cover 42 are preferably formed of a plastic based material such as ABS-GF by an injection molding. A sealing member for preventing air leakage can be formed at both ends of the heat exchange portion 30 to which the front cover 40 and the rear cover 42 are coupled.

The fin structure 34 is preferably formed as a rectangular parallelepiped shape having a constant thickness, width, and length by bending a metal plate in a zigzag form. As the metal plate is bent in a zigzag form, a structure having repeatedly formed valleys is formed. The tubes 32 are then adhered to upper and lower surfaces of the structure. The spaces between the flat parallel portions of the bent plate form air passages into which external air is introduced and then is exhausted therefrom after a heat exchange.

A plurality of fins are formed on the flat parallel sidewalls of the air passages. The fins are formed on at least one side of each air passage, and preferably on both sides of each air passage. The plural fins are actually portions of the flat sides of the plate that have been cut and then bent inward into the air passages. The fins protrude from the surfaces of the air passages at an inclined angle.

The fin structures 34 are formed by partially cutting the metal plate and then repeatedly bending the metal plate in a zigzag form so as to form a plurality of air passages. The process can be performed by one consecutive processing using an automatic machine.

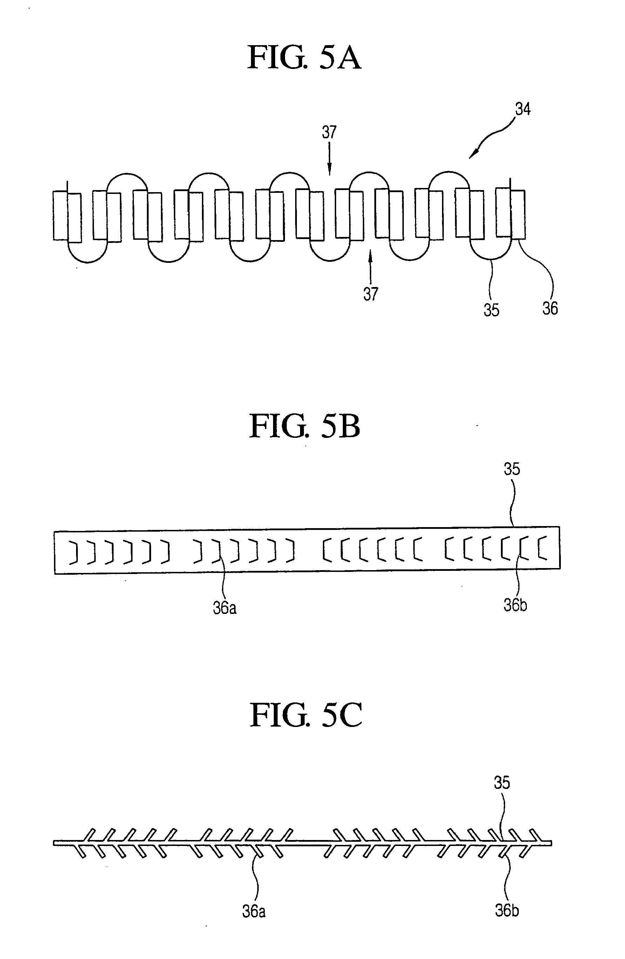

The fin structure 34 of the heat exchanger according to the present invention is shown in FIGS. 5A to 5C, which are views as seen from the directions of arrows A, B, and C of FIG. 4. A plurality of fins 36 are formed on the sidewall surfaces of the air passages 37. The fins 36 are protruding from the opposing flat parallel surfaces of the air passages 37 at an inclined angle. The fins 36 have a shape corresponding to scales of fish, and serve as a medium for contacting external air introduced into the heat exchanger and transferring heat into or away from the passing through the air passages.

The fin structure 34 of the heat exchanger according to the present invention is easily fabricated since the plural fins 36 are formed to have a simple structure. For instance, the fins 36 can be protruding from the surface of the metal by partially cutting the surface of the metal on the air passage 37 by punching or by other means.

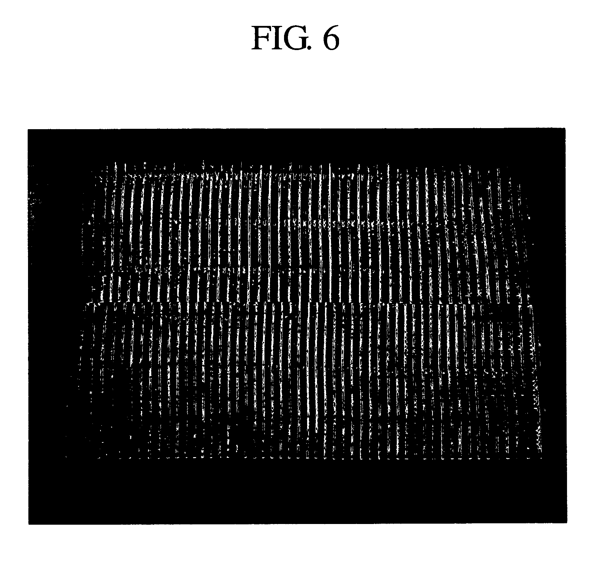

The plural fins 36 are divided into two groups, each of which are bent in different directions on one surface of the air passage. External air flowing through the air passages performs a heat exchange with wet air inside the dryer that is circulating through the tubes 32. In order to effectively perform the heat transfer, the external air preferably forms a turbulent flow because of the fin structure. The plural fins on the surfaces of the air passage are bent in different directions to promote a turbulent flow. The turbulent flow facilitates external air that passes through the air passage of the fin structure to obtain heat from the high temperature wet air passing through the tubes 32. Two fin groups 36a and 36b having different inclination directions are shown in FIGS. 5B and 5C. FIG. 6 shows a photo of a completed fin structure.

In the heat exchanger according to the present invention, the fin structure influences the heat exchange performance. For example, the fins 36 preferably protrude from the sidewalls of the air passages 37 by approximately 0.4 to 0.7mm. If the protruding portions of the fins 36 are too small, external air is not in good contact with the fins. On the other hand, if the protruding portions of the fins 36 are too large, flow friction of the external air is increased and thus noise is increased.

A gap between the fins is formed to be 1 to 3 mm, preferably, to be 1.5 to 2.5mm. If the gap is too small, flow friction of external air is increased. On the other hand, if the gap is too great, a heat transfer is decreased.

A thickness of the fin structure 34 is determined by considering a relationship with the tube 32 coupled to the fin structure 34. The thickness of the fin structure 34 can vary, but preferably has a range of 8 to 10mm. The thickness of the tube is preferably thinner than the thickness of the fin structure in order to enhance heat transfer.

A distance between the surfaces of each air passage 37 in the bent fin structure 34, that is, a pitch of the fin structure, is formed not to be too small or too large. If the pitch is too large, heat exchange is lowered and thus heat transfer efficiency is degraded. On the other hand, when the pitch is too small, external air has a large flow resistance, which increases noise even when heat exchange is increased. In the heat exchanger according to the present invention, the fin structure preferably has a pitch corresponding to 3 to 6mm.

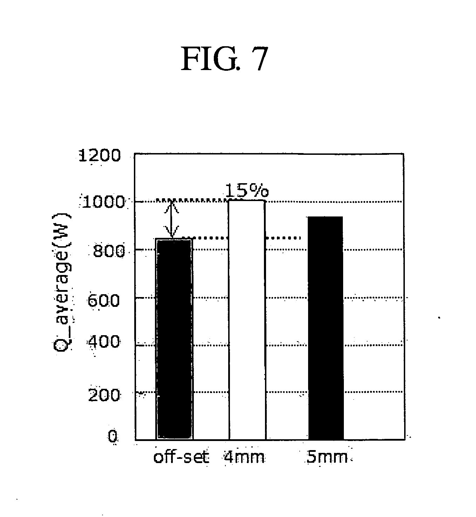

FIG. 7 shows the results of a heat transfer performance test, which measured a heat transfer characteristic for several different heat exchangers. In FIG. 7, the first result is for a prior art heat exchanger having an offset fin structure which is different from the present invention. The second and third results are for a heat exchanger embodying the invention, wherein the pitch of the air passages was set to be 4mm and 5mm, respectively.

The heat transfer characteristic was calculated by the following formula.
Q = m·cₚ·ΔT (dried state)
Q = m·Δh (wet state)

In the above formula, the heat transfer characteristic, that is, a heat quantity variation (Q) is obtained by multiplying a mass (m) of flowing air, a constant pressure specific heat (cp), and a temperature variation (ΔT) to one another in a dried state. Also, the heat transfer characteristic is obtained by multiplying a mass (m) of flowing air and an enthalpy variation amount (Δh) to each other in a wet state.

From the result, it is clear that a heat exchange performance becomes different when the pitch of the air passage becomes different. Also, when compared with a heat exchanger having an offset fin structure, the heat exchangers having a fin structure according to the present invention have a heat exchange performance that is increased by as much as 15%.

As aforementioned, in the present invention, a heat transfer area and a heat transfer amount are increased, to thereby enhance an efficiency of the heat exchanger. The heat exchanger is used in a dryer as part of a condenser to remove water from the air being circulated through the dryer. This increases a drying efficiency of the dryer. Furthermore, since a fabrication cost of the heat exchanger is reduced, a price of the dryer is lowered and thus a product competitiveness is enhanced.

## Claims

1. A heat exchanger, comprising:
a plurality of first ducts for conveying a first fluid flow; and
a plurality of second ducts for conveying a second fluid flow, wherein the plurality of first ducts and the plurality of second ducts are stacked upon one another in an alternating fashion, and wherein each of the plurality of second ducts comprises:
a plurality of air passages formed by repeatedly bending a flat plate in a zig-zag fashion such that the plate forms opposing sidewalls; and
a plurality of fins that protrude from the opposing sidewalls of the air passages, wherein the fins comprise portions of the plate that are bent so that they extend into the air passages.

2. The heat exchanger of claim 1, wherein the fins are formed by selectively cutting portions of the plate that forms the plurality of air passages, and then bending the cut portions so that they form fins that extend into the air passages at an inclination angle relative to the sidewalls.

3. The heat exchanger of claim 2, wherein the fins on each sidewall are divided into two groups, wherein the fins in the first group extend into the corresponding air passage at a first inclination angle, and wherein the fins in the second group extend into the corresponding air passage at a second inclination angle.

4. The heat exchanger of claim 3, wherein the first group of fins are grouped together along a first portion of the air passage, and the second group of fins are grouped together along a second portion of the air passage.

5. The heat exchanger of claim 4, wherein the first group of fins and the second group of fins extend towards one another.

6. The heat exchanger of claim 2, wherein fins are formed on both sides of the majority of the sidewalls of the air passages.

7. The heat exchanger of any of claims 1 to 6, wherein the plurality of first air ducts extend in a first direction, and wherein the plurality of second air ducts extend in a second direction that is oriented approximately perpendicular to the first direction.

8. The heat exchanger of any of claims 1 to 7, wherein the heat exchanger is configured to be used in a clothing dryer, wherein the plurality of first air ducts are configured to convey a flow of heated air that is recirculated through a drum of the dryer, and wherein the plurality of second air ducts are configured to convey a flow of air from outside the dryer.

9. The heat exchanger of claim 8, wherein the heat exchanger is configured to cool the flow of heated air in the plurality of first air ducts to condense fluid in the heated air.

10. The heat exchanger of any of claims 1 to 9, wherein the plurality of fins have a height of approximately 8-10 mm.

11. The heat exchanger of any of claims 1 to 10, wherein a pitch between the air passages in each of the second air ducts is approximately 3-6mm.

12. The heat exchanger of any of claims 1 to 11, wherein the fins protrude into the air passages approximately 0.4-0.7mm.

13. The heat exchanger of any of claims 1 to 12, wherein a gap between fins on opposing sidewalls of the air passages is approximately 1-3mm.

14. The heat exchanger of any of claims 1 to 13, wherein the plurality of first ducts have a rectangular cross-sectional shape.

15. A clothing dryer comprising the heat exchanger of any of claims 1 to 14.

16. A heat exchanger, comprising:
a first duct for conveying a first fluid flow; and
a second duct for conveying a second fluid flow, wherein the first duct and the second duct are stacked upon one another, and wherein the second duct comprises:
a plurality of separate air passages having opposing sidewalls; and
a plurality of fins that protrude from the opposing sidewalls of the air passages, wherein the fins comprise portions of the sidewalls that are bent so that they extend into the air passages.

17. The heat exchanger of claim 16, wherein the fins are formed by selectively cutting portions of the sidewalls of the air passages, and then bending the cut portions so that they form fins that extend into the air passages at an inclination angle relative to the sidewalls.

18. The heat exchanger of claim 17, wherein a plurality of first air ducts and a plurality of second air ducts are stacked upon one another in an alternating fashion to form the heat exchanger.

19. The heat exchanger of claim 17, wherein the fins on each sidewall are divided into two groups, wherein the fins in the first group extend into the corresponding air passage at a first inclination angle, and wherein the fins in the second group extend into the corresponding air passage at a second inclination angle.

20. The heat exchanger of claim 19, wherein the first group of fins are grouped together along a first portion of the air passage, and the second group of fins are grouped together along a second portion of the air passage.
